# EUROPÄISCHE PATENTANMELDUNG

(11) **EP 3 961 972 A1**
(43) Veröffentlichungstag der Anmeldung: **02.03.2022**
(21) Anmeldenummer: 20192875.1
(22) Anmeldetag: 26.08.2020
(51) Int. Cl.: H04L 9/06, H04L 9/08, H04L 9/30

(54) **VERFAHREN UND SYSTEME ZUM ERZEUGEN EINDEUTIG IDENTIFIZIERBARER SOFTWARE-INSTALLATIONEN**

(71) Anmelder: Siemens Aktiengesellschaft, 80333 München (DE)
(72) Erfinder: Haasch, Axel, 91056 Erlangen (DE)

(57) **Zusammenfassung**

Verfahren zum Erzeugen einer eindeutig identifizierbaren Software-Installation (3,103), wobei für eine auf einem maschinenlesbaren Medium (2) installierte Software-Installation einer Software, ein aus einem privaten (4) und einem öffentlichen Schlüssel (5) bestehendes Schlüsselpaar generiert wird (S1), zum Erzeugen des Schlüsselpaares (4,5) mit installationsspezifischen Daten der Software-Installation (3,103) angereicherte (S3) Zufallszahlen (S2) verwendet werden, der erzeugte private Schlüssel (4) sicher abgelegt wird (S4).

## Beschreibung

Die Erfindung betrifft Verfahren und Systeme zum Erzeugen einer eindeutig identifizierbaren Software-Installation.

Darüber hinaus betrifft die Erfindung Verfahren und Systeme für Onboarding von Devices einer Automatisierungsanlage.

Außerdem betrifft die Erfindung Computerprogramme zum Ausführen der vorgenannten Verfahren, sowie maschinenlesbare Datenträger, auf welchen diese Computerprogramme gespeichert sind, und Datenträgersignale, welche diese Computerprogramme übertragen.

Obendrein betrifft die Erfindung Vorrichtungen, die jeweils mindestens einen Prozessor aufweisen, wobei der Prozessor derart ausgebildet ist und/oder dazu konfiguriert ist, die vorgenannten Verfahren auszuführen.

Device Onboarding ist ein Prozess, bei dem ein Netzwerkzugriff auf das Device bzw. Gerät zum ersten Mal bereitgestellt wird, das Device konfiguriert und das Device beispielsweise in einer Cloud / einem Server registriert wird.

Das Device kann beispielsweise mittels Installation einer Konfiguration auf dem Device beziehungsweise mittels seiner Aktivierungsdienste konfiguriert werden.

Nach dem Onboarding kann die Nutzung des Devices von jedem Ort über ein oder mehrere Netzwerke, beispielsweise Internet und lokales Anlagennetzwerk erfolgen.

Internet of Things-Produkte (Edge-Devices, PLCs etc.) als auch SCADA-Systeme i.A. sind zunehmend Cyber-Angriffen ausgesetzt ("SCADA incidents", "Industroyer"). Deshalb ist ein vollständig umfassender Integritätsschutz unumgänglich. Zu dem zählt u.a. die Absicherung der Kommunikationsverbindungen, die eine Verteilung operationaler Zertifikate (z.B. TLS) zur kryptographischen Absicherung von Kommunikationsverbindungen (z.B. http, OPC UA, MQTT) erfordern. Um garantieren zu können, dass sich kein nicht autorisierter Dritter in die Kommunikation einschleust ist es erforderlich, dass sämtliche Kommunikationspartner eindeutig identifizierbar sind.

Bezogen auf Embedded Runtime-Komponenten, z.B. Edge-Devices oder PLCs können Geräteherstellerzertifikate, beispielsweise sogenannte Manufacturer Device Certificates (MDC) beziehungsweise Initial Device Identifier (IDevID) zum Einsatz kommen, die während der Fertigung des Hardware-Produktes individuell erzeugt und dauerhaft in einem sicheren Speicher abgelegt werden. So stellen diese eine Funktion einer Geburtsurkunde dar. Diese sind jedoch auf Software-Instanz-Installationen nicht übertragbar, da diese von Kunden und/oder Gerätehersteller-Mitarbeitern erst beim Kunden installiert werden, und nicht in einer geschützten Geräte-Produktionsumgebung.

Der Erfindung zugrunde liegende Aufgabe kann somit darin gesehen werden, eine eindeutige Identifizierbarkeit einer (konkreten) Software-Installation, insbesondere einer Software-Installation aus dem Engineering System-Kontext zu ermöglichen.

Die Aufgabe der Erfindung wird mit einem eingangs genannten Verfahren erfindungsgemäß dadurch gelöst, dass für eine auf einem maschinenlesbaren Medium, beispielsweise auf einer Festplatte eines Computers, installierte Software-Installation einer Software, vorzugsweise einer Konfigurationssoftware, insbesondere einer Engineering-System-Software (Engineering-Station-Software) ein aus einem privaten und einem öffentlichen Schlüssel bestehendes Schlüsselpaar generiert wird, zum Erzeugen des Schlüsselpaares mit installationsspezifischen Daten der Software-Installation angereicherte Zufallszahlen verwendet werden, der erzeugte private Schlüssel sicher, beispielsweise hardware- oder softwaregebunden abgelegt wird.

Dadurch, dass die Zufallszahlen mit installationsspezifischen Daten der Software-Installation angereichert werden und diese derart angereicherten Zufallszahlen als Initialisierungswerte für die Erzeugung eines kryptographischen privaten Schlüssels dienen, erhält die Software-Installation einen eindeutigen Fingerprint. Darüber hinaus wird dadurch ein Klonen der Software-Installation erschwert.

Die Erfindung ermöglicht somit ein beispielsweise softwaregebundenes "Device Provisioning". Das eröffnet neben der Initiierung instanzspezifischer geschützter Kommunikationsverbindungen, auch software-instanzspezifische Lizensierungsmöglichkeiten, ohne einen harware-basierten zweiten Faktor (Dongle) einbeziehen zu müssen.

Im Rahmen der vorliegenden Offenbarung wird unter Software-Installation eine auf einem konkreten maschinenlesbaren Medium, beispielsweise auf eine Festplatte eines Computers, zum Beispiel eines Servers, oder auf einem verteilten Datenverarbeitungssystem, in einer Cloud etc. verstanden.

Im Kontext der vorliegenden Offenbarung kann ein Prozessor eine Maschine oder eine elektronische Schaltung sein. Ein Prozessor kann beispielsweise durch eine CPU-Einheit oder einen Mikroprozessor oder einen Mikrocontroller implementiert sein, z. B. durch eine anwendungsspezifische integrierte Schaltung (ASIC) oder durch einen digitalen Signalprozessor, vorzugsweise in Kombination mit einem maschinenlesbaren (Speicher)medium zum Speichern von Programmcode usw. Ein Prozessor kann alternativ oder zusätzlich durch eine integrierte Schaltung (IC) implementiert sein, insbesondere durch ein feldprogrammierbares Gate-Array (FPGA), einen ASIC oder einen digitalen Signalprozessor (engl. DSP digital signal processor) oder eine Grafikverarbeitungseinheit (GPU). Alternativ oder zusätzlich kann ein Prozessor durch einen virtuellen Prozessor oder eine virtuelle Maschine oder eine weiche CPU implementiert sein. Ein Prozessor kann durch einen programmierbaren Prozessor implementiert sein, der Konfigurationsschnittstellen aufweist, die die Konfiguration verschiedener hier beschriebener Methoden erleichtern. Der programmierbare Prozessor kann konfiguriert sein, um hierin beschriebene Verfahrensschritte, Komponenten, oder andere Aspekte der hierin beschriebenen Methoden zu implementieren.

Bei einer Ausführungsform kann mit Vorteil vorgesehen sein, dass die installationsspezifischen Daten einen Zeitpunkt der Installation (z.B. Datum, Uhrzeit (mit Sekunden)) und/oder Angaben über zum Zeitpunkt der Individualisierung verfügbaren Arbeitsspeicher (z.B. unter Windows mit "systeminfo", unter Linux mit "free") und/oder eine Systemstartzeit (z.B. unter Windows mit "systeminfo", unter Linux mit "uptime") umfassen.

Dabei kann das Klonen der Software-Installation zusätzlich erheblich erschwert werden, wenn die installationsspezifischen Daten den Zeitpunkt der Installation, die Angaben über den zum Zeitpunkt der Individualisierung verfügbaren Arbeitsspeicher und die Systemstartzeit umfassen, vorzugsweise aus diesen Daten bestehen.

Bei einer Ausführungsform kann mit Vorteil vorgesehen sein, dass das Schlüsselpaar basierend auf elliptischen Kurven, vorzugsweise auf Isogenien der elliptischen Kurven, insbesondere auf Isogenien der supersingulären elliptischen Kurven erzeugt wird.

Bei einer Ausführungsform kann es vorteilhaft sein, wenn die Software als eine Software zum Konfigurieren von digitalen Zwillingen ausgebildet ist.

Darüber hinaus wird die Aufgabe mit einem eingangs genannten Computerprogramm erfindungsgemäß dadurch gelöst, dass das Programm Befehle umfasst, die bei der Ausführung des Programms durch einen Computer diesen veranlassen, das vorgenannte Verfahren auszuführen.

Außerdem wird die Aufgabe mit einem eingangs genannten System erfindungsgemäß dadurch gelöst, dass das System ein maschinenlesbares Medium (z.B. Festplatte eines Computers), auf welchem eine Software-Installation einer Software, vorzugsweise einer Konfigurationssoftware, insbesondere einer Engineering-System-Software (Engineering-Station-Software) vorliegt (installiert ist bzw. wurde) und einen der Software-Installation zugeordneten, basierend auf mit installationsspezifischen Daten der Software-Installation angereicherten, vorzugsweise entropiebehafteten Zufallszahlen erzeugten, sicher abgelegten privaten Schlüssel umfasst. Der private Schlüssel kann beispielsweise auf der vorgenannten Festplatte oder auf dem Computer, der diese Festplatte umfasst, abgelegt werden. Ablegen des privaten Schlüssels in einer Cloud oder in einem Distributed-Ledger-Netzwerk, z.B. einer Blockchain, ist ebenfalls denkbar.

Unter einer entropiebehaftete Zufallszahl wird im Rahmen der vorliegenden Offenbarung eine Zufallszahl verstanden, die mit einer von 0 verschiedenen Entropie behaftet ist. Dabei kann die Höhe der Entropie der Applikation angemessen gewählt werden.

Obendrein wird die Aufgabe mit einem eingangs genannten Device-Onboarding-Verfahren erfindungsgemäß dadurch gelöst, dass eine Software-Installation mit einem aus einem privaten und einem öffentlichen Schlüssel bestehenden Schlüsselpaar gemäß dem vorgenannten Verfahren bereitgestellt wird, die Software eine vertrauenswürdige Kommunikation zu dem Device aufbaut, das Device mittels der Software-Installation konfiguriert wird, und der öffentliche Schlüssel an das Device vorzugsweise verschlüsselt übermittelt wird.

Bei einer Ausführungsform kann es zweckdienlich sein, dass das Device als ein Embedded-Device, beispielsweise Runtime- oder ein IoT-Device oder als ein digitaler Zwilling ausgebildet ist.

Wenn das Device als Digital Twin ausgebildet ist, der eine rein virtuelle Nachbildung einer Maschine darstellt, kann die vorgenannte Software als eine Software zum Konfigurieren eines solchen digitalen Zwillings sein. Durch eine eindeutige Identifizierbarkeit der Software-Installation ist auch eine eindeutige Identifikation von digitalen Zwillingen möglich.

Bei einer Ausführungsform kann es zweckmäßig sein, wenn das Device eine Whitelist umfasst, in die der öffentliche Schlüssel eingetragen wird.

Die Aufgabe wird außerdem mit einem eingangs genannten Onboarding-Computerprogramm erfindungsgemäß dadurch gelöst, dass das Programm Befehle umfasst, die bei der Ausführung des Programms durch einen Computer diesen veranlassen, das vorgenannte Device-Onboarding-Verfahren auszuführen.

Des Weiteren wird die Aufgabe mit einem eingangs genannten Onboarding-System erfindungsgemäß dadurch gelöst, dass das Onboarding-System ein Device einer Automatisierungsanlage und das vorgenannte System umfasst, wobei das System ferner einen Prozessor aufweist, der derart ausgebildet und/oder dazu konfiguriert ist, das Onboarding des Devices gemäß dem vorgenannten Verfahren durchzuführen. Der Prozessor kann dabei beispielsweise Befehle abarbeiten, die in dem vorgenannten Onboarding-Computerprogramm enthalten sind, wobei das Onboarding-Computerprogramm vom Onboarding-System umfasst oder über Fernzugriff, z.B. in einer Cloud bereitgestellt sein kann.

Darüber hinaus wird die Aufgabe mit einem oder mehreren Datenträgersignalen gelöst, welches/welche eines oder mehrere der oben genannten Computerprogramme überträgt/übertragen. Dabei können unterschiedliche Signale unterschiedliche Computerprogramme übertragen (Onboarding-Computerprogramm oder Computerprogramm usw.).

Die Datenträgersignale, die das(die) vorgenannte(n) Computerprogramm(e) transportieren, können als elektronische, magnetische, magneto-elektronische, optische oder opto-elektronische Signale ausgebildet sein. Die Datenträgersignale sind durch eine beliebige digitale Signalfolge definiert. Die Signalfolge kann auf einem (flüchtigen oder nicht-flüchtigen) computerlesbaren Speichermedium abgelegt werden. Somit können die oben genannten Computerprogramme beispielsweise aus einer Cloud oder aus einem anderen Netzwerk auf einen Computer des vorgenannten Systems oder Onboarding-Systems übertragen und beispielsweise auf diesem installiert werden.

Beispielsweise kann das Datenträgersignal derart ausgebildet sein, dass eine wie oben beschriebene Automatisierungsanlage, insbesondere ein wie oben beschriebenes System/Onboarding-System mit einem oder mehr wie oben beschriebenen Programmen nachträglich erweitert werden kann. Das Datenträgersignal kann dabei kabellos bzw. durch Devicehersteller oder einen anderen Anbieter, beispielsweise Softwareanbieter übertragen werden und in die Automatisierungsanlage eingespielt werden.

Im Folgenden wird die Erfindung anhand der in den Figuren dargestellten Ausführungsbeispiele näher beschrieben und erläutert. Es zeigen:
- FIG 1: ein Flussdiagramm eines Verfahrens,
- FIG 2: ein System zum Erzeugen eindeutig identifizierbarer System-Installationen,
- FIG 3: ein Flussdiagramm eines Device-Onboarding-Verfahrens, und
- FIG 4: ein Device-Onboarding-System.

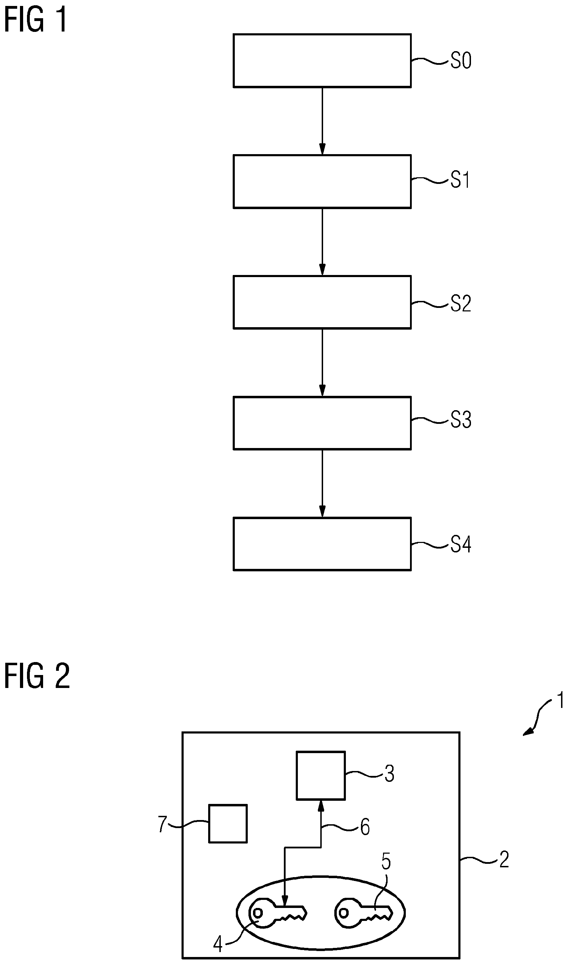

FIG 1 zeigt ein Flussdiagramm, auf dem ein Verfahren zum Erzeugen einer eindeutig identifizierbaren Software-Installation illustriert ist, welches dem erfindungsgemäßen Verfahren entspricht.

Gegeben sei eine Software-Installation 3 einer Software auf einem maschinenlesbaren Medium 2, beispielsweise auf einer Festplatte eines Computers (vgl. FIG 2). Bei der Software handelt es sich vorzugsweise um eine industrielle Software, insbesondere eine Konfigurationssoftware, beispielsweise eine Engineering-System-Software bzw. Engineering-Station-Software.

Um die Software-Installation 3 auf dem maschinenlesbaren Medium 2 zu erhalten, kann die Software beispielsweise in einem Schritt S0 auf dem maschinenlesbaren Medium 2 installiert werden.

In einem Schritt S1 wird für die installierte Software-Installation 3 ein Schlüsselpaar bestehend aus einem privaten Schlüssel 4 und einem öffentlichen Schlüssel 5 generiert.

Beim Erzeugen des Schlüsselpaares 4, 5 werden zunächst Zufallszahlen vorzugsweise entropiebehaftete insbesondere AIS31-konforme Zufallszahlen erzeugt - Schritt S2. Solche Zufallszahlen, die eine zum Generieren eines Schlüsselpaares ausreichende Entropie aufweisen, können beispielsweise mithilfe einer Crypto-Bibliothek, beispielsweise OpenSSL erzeugt werden. Dabei können zuverlässige Rauschquellen einbezogen werden.

In einem Schritt S3 werden die wie oben beschrieben erzeugte Zufallszahlen mit installationsspezifischen Daten der Software-Installation 3 angereichert.

Die installationsspezifischen Daten können dabei einen Zeitpunkt der Installation (z.B. Datum, Uhrzeit (z.B. mit Sekunden)) und/oder Angaben über zum Zeitpunkt der Individualisierung verfügbaren Arbeitsspeicher (z.B. unter Windows mit "systeminfo", unter Linux mit "free" erhältlich) und/oder eine Systemstartzeit (z.B. unter Windows mit "systeminfo", unter Linux mit "uptime" erhältlich) umfassen.

Insbesondere können die installationsspezifischen Daten den Zeitpunkt der Installation und die Angaben über den zum Zeitpunkt der Individualisierung verfügbaren Arbeitsspeicher und die Systemstartzeit umfassen. Vorzugsweise bestehen die installationsspezifischen Daten aus dem Zeitpunkt der Installation, den Angaben über den zum Zeitpunkt der Individualisierung verfügbaren Arbeitsspeicher und der Systemstartzeit.

Die vorgenannten mit den installationsspezifischen Daten angereichert Zufallszahlen dienen im Folgenden als Initialisierungswerte für die Erzeugung des Schlüsselpaares 4, 5 und insbesondere des kryptographischen privaten Schlüssels 4. Somit erhält die Software-Installation 3 einen Fingerprint, der die spezifischen Daten dieser Installation enthält, die einem Dritten nur sehr schwer, wenn überhaupt, zugänglich sind.

Der private Schlüssel 4 kann beispielsweise einem asymmetrischen Crypto-Algorithmus folgen, der heute von ankerkannten Institutionen als ausreichend sicher in Bezug auf die zu erwartende Lebensdauer der jeweiligen Software-Installation 3 beurteilt wird.

Beispielsweise kann das Schlüsselpaar basierend auf elliptischen Kurven, vorzugsweise auf Isogenien der elliptischen Kurven, insbesondere auf Isogenien der supersingulären elliptischen Kurven erzeugt werden. Die ECC (engl. elliptic curve cryptography) gilt als besonders sicher und im Vergleich zu RSA hinsichtlich der Schlüssellänge effizienter. Darüber hinaus können Kryptosysteme mit öffentlichem Schlüssel, die auf Isogenitäten zwischen supersingulären elliptischen Kurven basieren, quantenresistent sein, d.h. gegen Angriffe einer Partei resistent sein, die über einen Quantencomputer verfügt und diesen zum Knacken der Schlüssel verwenden kann.

In einem Schritt S4 wird der erzeugte private Schlüssel 4 sicher, beispielsweise hardware- oder softwaregebunden abgelegt wird.

Beispielsweise kann der private Schlüssel 4 auf einem Hardware-Cryptochip oder über die Microsoft Cryptography API abgelegt oder über ein Vault-Produkt abgelegt werden.

FIG 2 zeigt ein System 1, das das maschinenlesbare Medium 2 umfasst. FIG 2 lässt erkennen, dass die Software-Installation 3 auf dem maschinenlesbaren Medium 2 installiert ist. Außerdem kann der der Software-Installation 3 zugeordnete - die Zuordnung ist mit dem Pfeil 6 in FIG 2 verdeutlicht - private Schlüssel 4 ebenfalls auf dem maschinenlesbaren Medium 2 sicher gespeichert sein. Beispielsweise kann das maschinenlesbare Medium 2 den vorgenannten Hardware-Cryptochip umfassen, damit dort der private Schlüssel 4 abgelegt werden kann.

In FIG 2 ist außerdem ein Computerprogramm 7 gezeigt, wobei das Computerprogramm 7 Befehle umfasst, die bei der Ausführung des Programms 7 durch einen Prozessor oder Computer (nicht gezeigt) diesen veranlassen, Schritte S0 bis S4 oder S1 bis S4 des vorgenannten Verfahrens auszuführen.

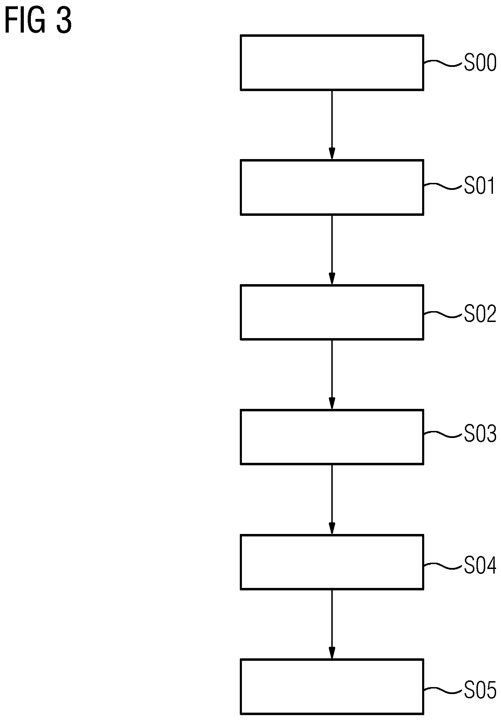

In Fig 3 ist ein Device-Onboarding-Verfahren für ein Embedded-Device einer Automatisierungsanlage gezeigt, das dem erfindungsgemäßen Verfahren für Onboarding eines Devices entspricht.

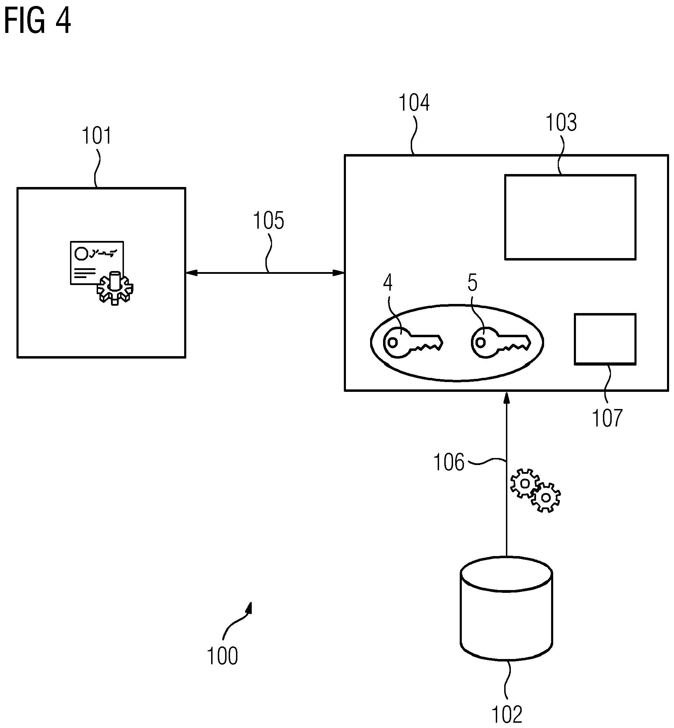

Dabei kann bei einem Installationsschritt S00 von einer Installationsquelle 102 eine Engineering-Station 103 bzw. eine Engineering-Komponente beispielsweise auf einer Festplatte eines Computers 104 (einem Server oder einem Laptop) installiert werden (siehe auch FIG 4, Pfeil 106). Der Computer kann im Allgemeinen als ein mobiles Gerät, z.B. als ein Smartphone oder ein Tablet oder als ein stationärer Computer oder als ein virtueller Computer in einer Cloud/Netzwerk-Infrastruktur ausgebildet sein.

Bei einem Schritt S01 wird die Engineering-Station 103 an ein Schlüsselpaar 4, 5 aus einem privaten Schlüssel 4 und einem öffentlichen Schlüssel 5 gebunden, wobei die Schlüssel 4, 5 einen Fingerprint aus installationsspezifischen Daten der Engineering-Station 103 enthalten und diese dadurch eindeutig identifizierbar machen. Der Schritt S01 kann beispielsweise die vorgenannten Schritte S1 bis S4 der FIG 1 umfassen.

Die installationsspezifischen Daten umfassen vorzugsweise den Zeitpunkt der Installation, die Angaben über den zum Zeitpunkt der Individualisierung verfügbaren Arbeitsspeicher und die Systemstartzeit.

In einem Schritt S02 baut die Engineering-Station 103 eine vertrauenswürdige Kommunikation 105 bzw. eine Vertrauensbeziehung zu einem Device 101 auf.

In einem Schritt S03 wird das Device 101 mittels der Engineering-Station 103 konfiguriert.

In einem Schritt S04 wird der öffentliche Schlüssel 5 an das Device 101 übermittelt. Die Übermittlung findet vorzugsweise verschlüsselt statt.

Das Device 101 kann eine Whitelist umfassen. In einem optionalen Schritt S05 kann der übermittelte öffentliche Schlüssel 5 in dieser Whitelist eingetragen werden. Somit kann das Device 101 eine Kondition darüber führen, welchen Engineering-Stationen 103 und im Allgemeinen welchen Software-Installationen es vertrauen kann und somit zu welchen Engineering-Stationen bzw. Software-Installationen es eine Verbindung aufbauen darf.

FIG 4 zeigt ein Device-Onboarding-System 100, welches einem erfindungsgemäßen Onboarding-System entspricht. Das Device-Onboarding-System 100 weist Mittel auf und ist dazu konfiguriert das mit Bezug auf FIG 3 beschriebene Verfahren auszuführen. Das Device-Onboarding-System 100 umfasst das Device 101 und den Computer 104, auf dem die eindeutig identifizierbare Engineering-Station 103 samt dem Schlüsselpaar 4, 5 vorliegt.

Darüber hinaus kann der Computer 104 ein Computerprogramm 107 umfassen, wobei das Computerprogramm 107 Befehle umfasst, die bei der Ausführung des Programms 107 durch einen 104 Computer diesen veranlassen, die vorgenannten Verfahrensschritte S01 bis S04 und optional S05 auszuführen.

Wie bereits erwähnt, kann das Device 101 als ein Embedded-Device ausgebildet sein. Insbesondere kann das Embedded-Device als ein Runtime- oder ein IoT-Device oder als ein digitaler Zwilling ausgeführt sein und beispielsweise eine Device-ID und/oder Herstellergerätezertifikat (engl. Manufacturer Device Certificate, MDC) und/oder weitere herstellerspezifische Angaben aufweisen. Eine oder mehrere dieser Angaben können beispielsweise durch Normen, wie z.B. IEEE 802.1AR 2018 oder durch herstellerspezifische Normen vorgeschrieben sein. Verwendung solcher Angaben (Device-ID, Herstellergerätezertifikate, etc.) kann beispielsweise beim Aufbau der vorgenannten Vertrauensbeziehung von Vorteil sein.

In den Ausführungsbeispielen und Figuren können gleiche oder gleich wirkende Elemente jeweils mit den gleichen Bezugszeichen versehen sein.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Insbesondere können die im Zusammenhang mit Verfahren beschriebenen Merkmale *mutatis mutandis* bei den Systemen eingesetzt werden und *vice versa.*

## Patentansprüche

1. Verfahren zum Erzeugen einer eindeutig identifizierbaren Software-Installation (3,103), wobei
- für eine auf einem maschinenlesbaren Medium (2) installierte Software-Installation (3, 103) einer Software (102), ein aus einem privaten (4) und einem öffentlichen Schlüssel (5) bestehendes Schlüsselpaar (4,5) generiert wird (S1), wobei
- zum Erzeugen des Schlüsselpaares (4, 5) mit installationsspezifischen Daten der Software-Installation (3, 103) angereicherte (S3) Zufallszahlen (S2) verwendet werden,
- der erzeugte private Schlüssel (4) sicher abgelegt wird (S4) .

2. Verfahren nach Anspruch 1, wobei die installationsspezifischen Daten einen Zeitpunkt der Installation und/oder Angaben über zum Zeitpunkt der Individualisierung verfügbaren Arbeitsspeicher und/oder eine Systemstartzeit umfassen.

3. Verfahren nach Anspruch 2, wobei die installationsspezifischen Daten den Zeitpunkt der Installation und die Angaben über den zum Zeitpunkt der Individualisierung verfügbaren Arbeitsspeicher und die Systemstartzeit umfassen, vorzugsweise aus diesen Daten bestehen.

4. Verfahren nach einem der Ansprüche 1 bis 3, wobei das Schlüsselpaar (4,5) basierend auf elliptischen Kurven, vorzugsweise auf Isogenien der elliptischen Kurven, insbesondere auf Isogenien der supersingulären elliptischen Kurven erzeugt wird.

5. Verfahren nach einem der Ansprüche 1 bis 4, wobei die Software (102) als eine Software zum Konfigurieren von digitalen Zwillingen ausgebildet ist.

6. Computerprogramm (7), umfassend Befehle, die bei der Ausführung des Programms durch einen Computer (104) diesen veranlassen, das Verfahren nach einem der Ansprüche 1 bis 5 auszuführen.

7. System umfassend ein maschinenlesbares Medium (2), auf welchem eine Software-Installation (3, 103) einer Software (102) vorliegt und einen der Software-Installation (3, 103) zugeordneten, basierend auf mit installationsspezifischen Daten der Software-Installation (3, 103) angereicherten, vorzugsweise entropiebehafteten Zufallszahlen erzeugten, sicher abgelegten privaten Schlüssel (4).

8. Verfahren für Onboarding eines Devices (101) einer Automatisierungsanlage, wobei
- eine Software-Installation (3, 103) mit einem aus einem privaten (4) und einem öffentlichen Schlüssel (5) bestehenden Schlüsselpaar (4,5) gemäß einem Verfahren nach einem der Ansprüche 1 bis 5 bereitgestellt wird (S00, S01),
- eine vertrauenswürdige Kommunikation zwischen dem Device (101) und der Software-Installation (3, 103) aufgebaut wird (S02),
- das Device (101) mittels der Software-Installation (3, 103) konfiguriert wird (S03), und
- der öffentliche Schlüssel (5) an das Device (101) vorzugsweise verschlüsselt übermittelt wird (S04).

9. Verfahren nach Anspruch 8, wobei das Device (101) als ein Embedded-Device, beispielsweise Runtime- oder ein IoT-Device oder als ein digitaler Zwilling ausgebildet ist.

10. Verfahren nach Anspruch 8 oder 9, wobei das Device (101) eine Whitelist umfasst, in die der öffentliche Schlüssel (5) eingetragen wird (S05).

11. Computerprogramm (107), umfassend Befehle, die bei der Ausführung des Programms (107) durch einen Computer (104) diesen veranlassen, das Verfahren nach einem der Ansprüche 8 bis 10 auszuführen.

12. Onboarding-System (100) umfassend ein Device einer Automatisierungsanlage und ein System (1) nach Anspruch 7, wobei das System (1) ferner einen Prozessor umfasst, der derart ausgebildet und/oder dazu konfiguriert ist, das Onboarding des Devices (101) nach einem Verfahren nach einem der Ansprüche 8 bis 10 durchzuführen.

13. Maschinenlesbarer Datenträger, auf dem das Computerprogramm nach Anspruch 6 und/oder 11 gespeichert ist.

14. Datenträgersignal, dass das Computerprogramm nach Anspruch 6 und/oder 11 überträgt.

15. Vorrichtung, umfassend einen Prozessor, der derart ausgebildet und/oder dazu konfiguriert ist, dass er das Verfahren nach einem der Ansprüche 1 bis 5 und/oder das Verfahren nach einem der Ansprüche 8 bis 10 ausführen kann.
